# EUROPEAN PATENT APPLICATION

(11) **EP 2 487 887 A1**
(43) Date of publication of application: **15.08.2012**
(21) Application number: 10788693.9
(22) Date of filing: 19.04.2010
(51) Int. Cl.: H04M 3/00

(54) **WIRELESS FIXED TERMINAL AND SWITCHING METHOD FOR AUTOMATICALLY SWITCHING CALLING LINES**

(30) Priority: 23.10.2009 CN 200910180992
(71) Applicant: ZTE Corporation, Shenzhen, Guangdong 518057 (CN)
(72) Inventor: HUANG, Feng, Shenzhen Guangdong 518057 (CN); LIU, Tuanhui, Shenzhen Guangdong 518057 (CN)
(74) Representative: Howson, Richard G.B.
(86) International application number: PCT/CN2010/071895
(87) International publication number: WO 2010/145297

(57) **Abstract**

A stationary wireless terminal and a switching method for automatically switching communication lines are provided. The terminal includes: a wireless communication module, for detecting from time to time whether there is an incoming call from a wireless network side, and transmitting a channel switching control instruction to a switching control circuit based on a current interface connection state of an external telephone and an incoming call detection result or a detection result reported by a public switched telephone network (PSTN) interface circuit; a subscriber line interface circuit (SLIC), for performing a two/line four wire line conversion of a voice signal communicated between the wireless communication module and the external telephone; a switching control circuit, for accomplishing a connection control of the SLIC or PSTN interface circuit and the external telephone according to the channel switching control instruction; and a PSTN interface circuit, for detecting a line state and incoming call of a wired network side and detecting an on/off-hook state of the external telephone, and reporting detection result to the wireless communication module. The pretransmitted solution can easily realize voice calling service respectively from two lines.

## Description

### Technical field of the invention

The disclosure relates to the technical field of communications, and in particular to a stationary wireless terminal and a switching method for automatically switching communication lines.

### Background of the invention

With the development of the wireless communication technology and the increasing improvement of the digital cellular mobile communication network construction, a piece of stationary wireless access terminal equipment occupies a certain market gradually in recent years and is widely applied to many special occasions. The advantages of the stationary wireless access terminal lie in that: it is not subject to the constraints of hard line wiring and bad mobility of the conventional public switched telephone network (PSTN) wired telephone, thus it develops rapidly.

With the further development of the wireless communication technology, especially the gradual improvement of the data service rate, the stationary wireless terminal has demonstrated incomparable advantages with respect to the conventional wired technology. However in some occasions, such as weak areas and blind areas of wireless signals, the communication effect of the stationary wireless terminal is affected enormously. Furthermore, due to human habits, some inherent advantages of the PSTN wired telephone over the wireless telephone, such as better sound quality, less impact by weather and periphery accessories, environmental protection, lower charges and the like, people are still used to keeping a wired telephone terminal of PSTN line in the office and home.

However, at present, it is impossible for a subscriber to use a stationary wireless terminal and not abandon an existing stationary telephone.

### Summary of the disclosure

To solve the above problem, the disclosure provides a stationary wireless terminal and a switching method for automatically switching communication lines, for implementing the automatic switching between the wired network and the wireless network.

To achieve the purpose of the disclosure, the technical solution of the disclosure is realized by:
a stationary wireless terminal for automatically switching communication lines, including: a wireless communication module, a subscriber line interface circuit (SLIC), a switching control circuit and a public switched telephone network (PSTN) interface circuit;
the wireless communication module is configured to detect from time to time whether there is an incoming call from a wireless network side, and transmit a channel switching control instruction to the switching control circuit based on a current interface connection state of an external telephone and an incoming call detection result from the wireless network side or a detection result reported by the PSTN interface circuit;
the SLIC is configured to perform a two/four wire line conversion of a voice signal communicated between the wireless communication module and the external telephone during wireless communication;
the switching control circuit is configured to accomplish a connection control of the SLIC or PSTN interface circuit and the external telephone according to the channel switching control instruction transmitted by the wireless communication module;
the PSTN interface circuit is configured to detect a line state and an incoming call of a wired network side and detect an on/off-hook state of the external telephone, and report detection result to the wireless communication module.

When an interface of the external telephone is connected to the PSTN interface circuit, the wireless communication module is configured to, when an incoming call from the wireless network side is detected, or when the external telephone is at an off-hook state and is determined as a party calling the wireless network side according to an instruction input by the subscriber, or when the line of the wired network side is disconnected, transmit the channel switching control instruction to the switching control circuit;
when the interface of the external telephone is connected to the SLIC, the wireless communication module is configured to, when there is an incoming call from the wired network side, or when the external telephone is at the off-hook state and is determined as a party calling the wired network side according to the instruction input by the subscriber, transmit the channel switching control instruction to the switching control circuit.

The external telephone comprises one telephone.

When receiving the channel switching control instruction, the switching control circuit is configured to connect the interface of the external telephone to the interface circuit of the network side with which a conversation is to be performed, to perform a calling conversation or called conversation.

The external telephone comprises two telephones.

The terminal further comprises:
a priority setting circuit, which is connected with the wireless communication module and the two external telephones for setting priorities for using the two external telephones, wherein the external telephone with a higher priority is used preferably; and the external telephone with a lower priority is used when the external telephone with the higher priority is at the off-hook state and there is a new incoming call.

When receiving the channel switching control instruction transmitted by the wireless communication module, the switching control circuit is configured to connect the interface of the telephone with the higher priority and at the on-hook state currently to the interface circuit of the network side with which a conversation is to be performed, to perform a calling conversation or called conversation.

The wireless communication module is further configured to transmit the channel switching control instruction to the switching control circuit after the conversation is ended, for controlling the switching control circuit to switch the interface of the external telephone back to an initial interface connection state.

The switching control circuit is further configured to, when the stationary wireless terminal is started up, automatically connect the interface of the external telephone to the PSTN interface circuit or the SLIC according to the configuration information of the switching control circuit; and automatically connect the interface of the external telephone to the PSTN interface circuit when the stationary wireless terminal is powered down.

A switching method for automatically switching communication lines, including:
Step 1: detecting from time to time whether there is an incoming call from a wired network side and a wireless network side, and an on/off-hook state of an external telephone;
Step 2: when there is an incoming call, determining whether the interface of the external telephone is connected with a circuit interface of a network side for the incoming call, if not connected, switching the interface of the external telephone to the circuit interface of the network side for the incoming call for performing a conversation;
when the external telephone is at the off-hook state, determining the type of a calling network side according to an instruction input by the subscriber, and determining whether the interface of the external telephone is connected with the circuit interface of the calling network side, if not connected, switching the interface of the external telephone to the circuit interface of the calling network side for performing a conversation.

The external telephone comprises one or two telephone(s).

When the external telephone comprises two telephones, the method may further comprises the following operations: setting use priorities of the two external telephones, wherein the external telephone with a higher priority is used preferably; and the external telephone with a lower priority is used when the external telephone with the higher priority is at the off-hook state and there is a new incoming call.

The Step 2 is specifically as follows:
when an incoming call coming from the wired network side or the wireless network side is detected, determining whether the interface of the external telephone is connected with the circuit interface of the network side for the incoming call, if not connected, switching the interface of the external telephone with a higher priority and at the on-hook state currently to the circuit interface of the network side for the incoming call for performing a conversation;
when it is detected that the external telephone is in the off-hook state, determining the type of the calling network side according to the instruction input by the subscriber, and determining whether the interface of the external telephone is connected with the circuit interface of the calling network side, if not connected, switching the interface of the external telephone with the higher priority and at the on-hook state currently to the circuit interface of the calling network side for performing a conversation.

After the Step 2, the method further comprises the following operation: switching the interface of the external telephone back to the initial interface connection state after the conversation is ended. Compared with the prior art, the disclosure has following advantages:
by the stationary wireless terminal provided by the disclosure, both the wire and wireless access manners can be provided for the subscriber, and the automatic switching between the wired network and the wireless network is realized; furthermore, the terminal can ensure that the subscriber can receive incoming calls from two networks synchronously by connecting two telephones to perform voice calling service, so that the technical effect that the use is convenient and economic is achieved.

### Brief description of the drawings

Fig. 1 shows a structural diagram of a stationary wireless terminal for automatically switching communication lines provided by the disclosure;
Fig. 2 shows a structural diagram of an application system of the stationary wireless terminal provided by embodiment 1 of the disclosure;
Fig. 3 shows a flowchart of automatically communication lines switching performed when the stationary wireless terminal is used as a called party provided by embodiment 1 of the disclosure;
Fig. 4 shows a flowchart of automatically communication lines switching performed when the stationary wireless terminal is used as a calling party provided by embodiment 1 of the disclosure;
Fig. 5 shows a structural diagram of the application system of the stationary wireless terminal provided by embodiment 2 of the disclosure;
Fig. 6 shows a flowchart of automatically communication lines switching performed by the stationary wireless terminal provided by embodiment 2 of the disclosure.

### Detailed description

The technical solution in the embodiment of the disclosure is clearly and completely described in the following with reference to the accompanying drawings in the embodiment of the disclosure.

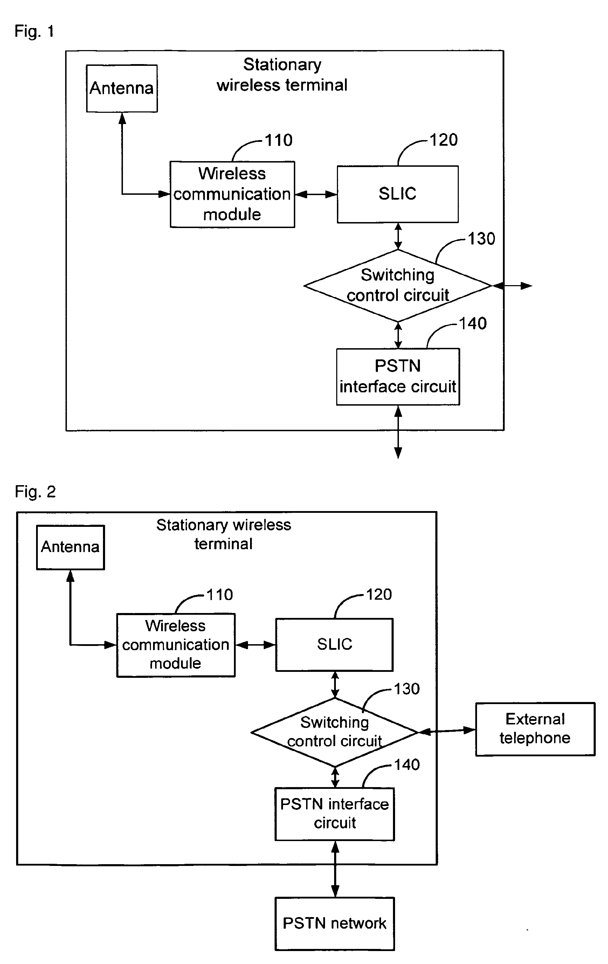

To solve the technical problems proposed in the background of the disclosure, the disclosure provides a stationary wireless terminal for automatically switching communication lines. As shown in Fig. 1, the terminal specifically includes: a wireless communication module 110, an SLIC 120, a switching control circuit and a PSTN interface circuit;
the wireless communication module 110 is configured to detect from time to time whether there is an incoming call from a wireless network side, and transmit a channel switching control instruction to the switching control circuit 130 based on a current interface connection state of an external telephone and an incoming call detection result from the wireless network side or a detection result reported by the PSTN interface circuit;
the SLIC 120 is configured to perform a two/four wire line conversion of a voice signal communicated between the wireless communication module 110 and the external telephone during the wireless communication;
the switching control circuit 130 is configured to accomplish a connection control of the SLIC 120 or PSTN interface circuit 140 and the external telephone according to the channel switching control instruction transmitted by the wireless communication module 110;
the PSTN interface circuit 140 is configured to detect a line state and incoming call of a wired network side and detect an on/off-hook state of the external telephone, and report detection result to the wireless communication module 110.

By the stationary wireless terminal provided by the disclosure, both the wire and wireless access manners can be provided for the subscriber, and the automatic switching between the wired network and the wireless network is realized to perform the voice calling service, so that the technical effect that the use is convenient and economic is achieved.

Some preferred embodiments of the disclosure are given in the following according to Fig. 2 to Fig. 6, and further technical details of the disclosure are given with reference to the description of the embodiments, so that the structure of the device provided by the disclosure, functions of the functional modules included in the device, and the connection relations among respective functional modules can be better illustrated.

Embodiment 1 of the disclosure provides a stationary wireless terminal capable of implementing switching communication lines automatically, wherein the schematic drawing of the structure thereof is as shown in Fig. 1, and the diagram of the application system thereof is as shown in Fig. 2. The terminal specifically includes: a wireless communication module 110, an SLIC 120, a switching control circuit 130 and a PSTN interface circuit 140. Furthermore, besides the above functional modules, the terminal further includes hardware equipments such as a shell, an antenna, a data interface and the like, wherein the antenna is arranged inside or outside the shell.

Specifically, the wireless communication module 110 is the core circuit of wireless signal communication and is the platform for wireless signal transmission, which mainly includes a baseband processing unit 111 and a radio frequency processing unit 112, wherein the baseband processing unit 111 is connected with the SLIC 120, the PSTN interface circuit 140 and the radio frequency processing unit 112 respectively, the radio frequency processing unit 112 is connected with the antenna.

When the terminal provided by the disclosure is used as a calling party, the wireless communication module 110 receives a voice signal of an external telephone transmitted by the SLIC 120 via the baseband processing unit 111, and transmits the voice signal to the radio frequency processing unit 112; the radio frequency processing unit 112 demodulates the voice signal, and transmits the demodulated voice signal out via the antenna.

When the terminal provided by the disclosure is used as a called party, the radio frequency processing unit 112 receives data via the antenna, and demodulates the received data; the demodulated data is transmitted to the baseband processing unit 111, and the baseband processing unit 111 transmits the demodulated data to the SLIC 120.

Furthermore, the wireless communication module 110 is further configured to detect from time to time whether there is an incoming call from a wireless network side, and transmit a channel switching control instruction to the switching control circuit 130 based on a current interface connection state of the external telephone and an incoming call detection result from the wireless network side or a detection result reported by the PSTN interface circuit 140, so as to control the switching control circuit 130 to perform the switching of wired network or wireless network.

Specifically, when the interface of the external telephone is connected to the PSTN interface circuit 140, the wireless communication module 110 is configured to, when the incoming call from the wireless network side is detected, or when the external telephone is at the off-hook state and is determined as a party calling the wireless network side according to an instruction input by the subscriber, or when the line of the wired network side is disconnected, transmit the channel switching control instruction to the switching control circuit;
when the interface of the external telephone is connected to the SLIC 120, the wireless communication module 110 is configured to, when there is an incoming call from the wired network side, or when the external telephone is at the off-hook state and is determined as a party calling the wired network side according to the instruction input by the subscriber, transmit the channel switching control instruction to the switching control circuit 130.

One end of the SLIC 120 is connected with the wireless communication module 110, and the other end of the SLIC 120 is connected with the switching control circuit 130 for providing core circuit of wireless signal access interface for the external telephone; the external telephone can implement the voice service interaction with the wireless communication module 110 through the circuit.

Specifically, the SLIC 120 is responsible for receiving an analogue voice signal transmitted by the external telephone and performing a two to four line conversion of the voice signal in the wireless communication manner; the converted voice signal is transmitted to the wireless communication module 110 in the analogue or digital signal form; meanwhile, in the opposite transmission direction, the SLIC 120 receives the analogue or digital voice signal transmitted by the wireless communication module 110, performs four to two line conversion of the voice signal, and then transmits the voice signal to the external telephone.

Furthermore, the SLIC 120 further provides functions of a feed detection, a ring detection, an on/off-hook detection, an analogue on/off-hook detection and the like for the external telephone connected to the wireless network side, and can implement the functions of a dual tone multiple frequency (DTMF) detection, a frequency shift keying (FSK) detection, a caller identification and various prompt tones and the like according to the actual needs.

The switching control circuit 130 is connected with the SLIC 120, the PSTN interface circuit 140 and the external telephone respectively for accomplishing a connection control of the SLIC 120 or PSTN interface circuit 140 and the external telephone according to the channel switching control instruction transmitted by the wireless communication module 110.

Specifically, the switching control circuit 130 implements channel selection by the following ways: when the terminal provided by the disclosure is used as the called party, a wired incoming call or a wireless incoming call switching is implemented through the type of the incoming call; when the terminal provided by the disclosure is used as the calling party, a wired outgoing call or a wireless outgoing call switching can also be implemented. Furthermore, in case of abnormal power supply of the terminal provided by the disclosure, the switching control circuit 130 can automatically switch the interface of the external telephone to the PSTN interface circuit 140 of the wired network side; and when the terminal provided by the disclosure is electrified and started up, connect the interface of the external telephone to the PSTN interface circuit 140 or the SLIC 120 according to its own configuration information. Preferably, when the stationary wireless terminal is started up, the interface of the external telephone is connected to the PSTN interface circuit 140 side of the wired network side.

The PSTN interface circuit 140 is connected with the switching control circuit 130. The interface circuit is an application interface of wired network side and is the core circuit of wire signal access mainly for accomplishing the PSTN wire access of stationary terminal equipment. The PSTN interface circuit 140 establishes the physical channel between the PSTN network and the external telephone, and accomplishes the transmission of PSTN wire signal via the AB lines.

Specifically, the PSTN interface circuit 140 is further configured to accomplish the on/off-hook detection of the external telephone connected to the wired network side, the detection of the line access state and incoming call of the wired network side, and report the detection result to the wireless communication module 110. Furthermore, the PSTN interface circuit 140 is further configured to provide the functions of a ring detection and an analogue on/off-hook for the external telephone connected to the wired network side.

The flows of automatically communication lines switching performed when the stationary wireless terminal is used as the called party and the calling party respectively are elaborated in the following based on the connection relations and function descriptions of the above functional modules.

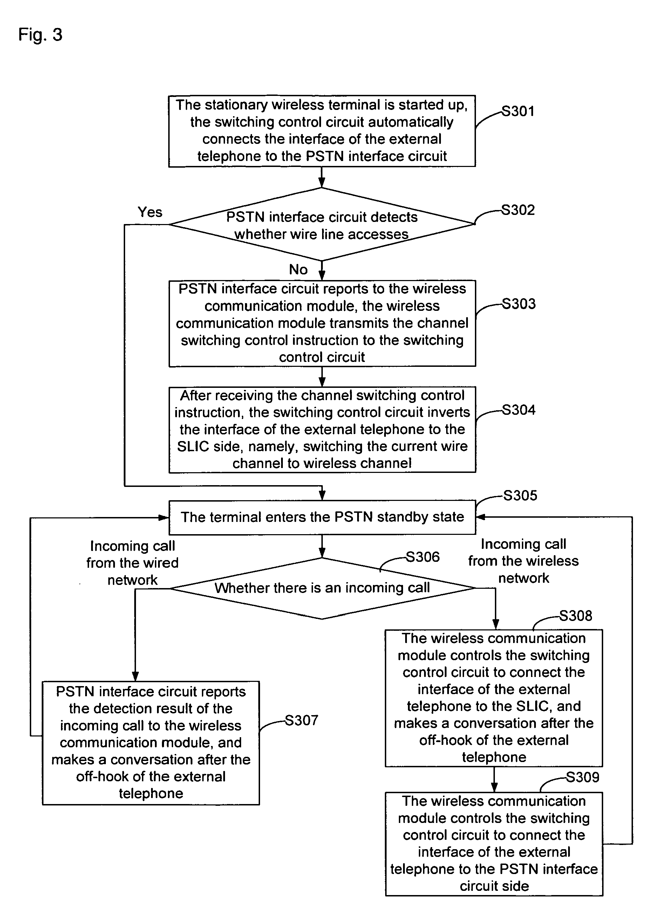

When the stationary wireless terminal is used as the called party, as shown in Fig. 3, the flow includes the following steps:
Step 301, the stationary wireless terminal is started up, the switching control circuit automatically connects the interface of the external telephone to the PSTN interface circuit.

Due to less impact of external connection on the wired network side, the stationary wireless terminal is usually set in wired network connection state when being started up. However the situation that when the stationary wireless terminal is started up, the interface of the external telephone is automatically connected to the SLIC circuit side via the switching control circuit is not excluded in the disclosure. This embodiment is illustrated by taking the situation of connecting to the network side as an example.

Step S302, PSTN interface circuit automatically detects whether a wire line accesses, if yes, executes Step S305, otherwise, executes Step S303.

Step S303, PSTN interface circuit reports the detection result that the wire line does not access the terminal to the wireless communication module, the wireless communication module transmits the channel switching control instruction to the switching control circuit via the SLIC.

Step S304, after receiving the channel switching control instruction, the switching control circuit inverts the interface of the external telephone to the SLIC side, namely, switching the current wire channel to the wireless channel.

Here, the stationary wireless terminal provided by the disclosure can be used as a stationary wireless terminal connected to the wireless network side separately.

Step S305, the terminal enters the PSTN standby state.

Step S306, the PSTN interface circuit and the wireless communication module detect from time to time whether there are incoming calls from their own network sides; when the PSTN interface circuit detects an incoming call, executes Step S307; when the wireless communication module detects an incoming call, executes Step S308.

Step S307, the PSTN interface circuit reports the detection result of the incoming call to the wireless communication module; since the interface of the current external telephone is connected to the PSTN interface circuit side, the wireless communication module does not need to transmit the channel switching control instruction, the call can be made directly after the off-hook of the external telephone; and returns to Step S305 after the conversation is ended.

Step S308, the wireless communication module transmits the channel switching control instruction to the switching control circuit via the SLIC; the switching control circuit connects the interface of the external telephone to the SLIC, and makes a conversation after the off-hook of the external telephone, and executes Step S309 after the conversation is ended.

Step S309, the wireless communication module transmits the channel switching control instruction to the switching control circuit via the SLIC; the switching control circuit connects the interface of the external telephone to the PSTN interface circuit side and returns to Step S305.

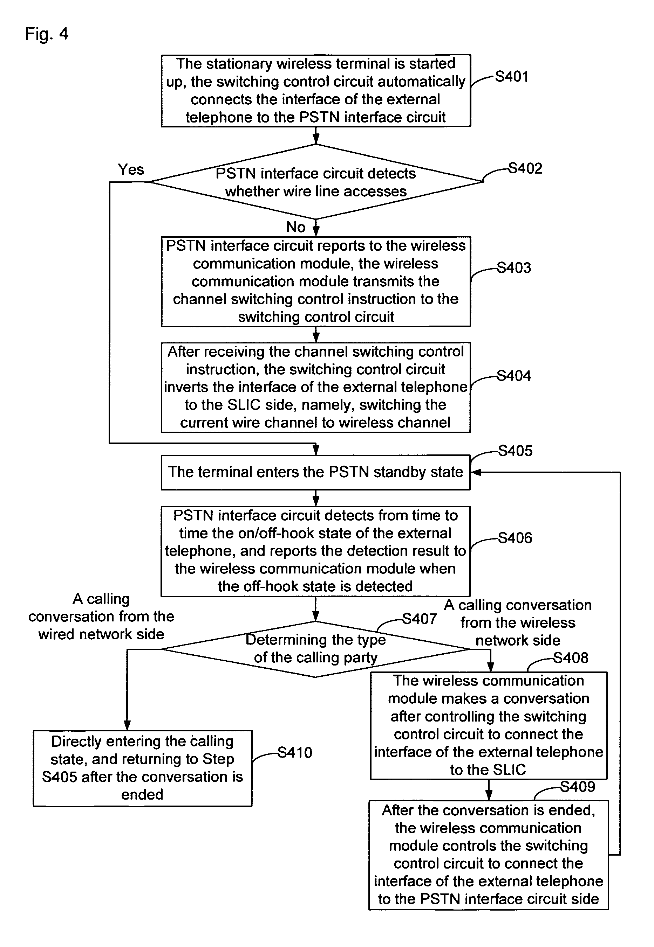

When the stationary wireless terminal is used as the calling party, as shown in Fig. 4, the flow comprises the following steps:
Step S401, the stationary wireless terminal is started up, the switching control circuit automatically connects the interface of the external telephone to the PSTN interface circuit.
Step S402, PSTN interface circuit detects whether a wire line accesses; if yes, executes Step S405, otherwise, executes Step S403.
Step S403, PSTN interface circuit reports the detection result that the wire line does not access the terminal to the wireless communication module, the wireless communication module transmits the channel switching control instruction to the switching control circuit via the SLIC.
Step S404, after receiving the channel switching control instruction, the switching control circuit connects the interface of the external telephone to the SLIC, namely, switching the current wire channel to wireless channel.
Step S405, the stationary wireless terminal enters the PSTN standby state.
Step S406, PSTN interface circuit detects from time to time the on/off-hook state of the external telephone, and reports the detection result to the wireless communication module when the off-hook state is detected.
Step S407, the wireless communication module detects the instruction input by the subscriber, and determines whether the calling conversation is a wireless network side calling conversation or a wired network side calling conversation; if it is a wireless network side calling conversation, executes Step S408, otherwise, executes Step S410.
Step S408, the wireless communication module transmits the channel switching control instruction to the switching control circuit; when receiving the control instruction, the switching control circuit enters the calling state after connecting the interface of the external telephone to the SLIC side, and executes Step S409 after the conversation is ended.
Step S409, the wireless communication module transmits the channel switching control instruction to the switching control circuit; when receiving the control instruction, the switching control circuit switches the interface of the external telephone back to the PSTN interface circuit side, and returns to Step S405.
Step S410, directly enter the calling state, and return to Step S405 after the conversation is ended.

By the stationary wireless terminal provided by the embodiment of the disclosure, both the wire and wireless access manners can be provided for the subscriber, and the automatic switching between the wired network and the wireless network is realized, to perform the voice calling service, so that the technical effect that the use is convenient and economic is achieved.

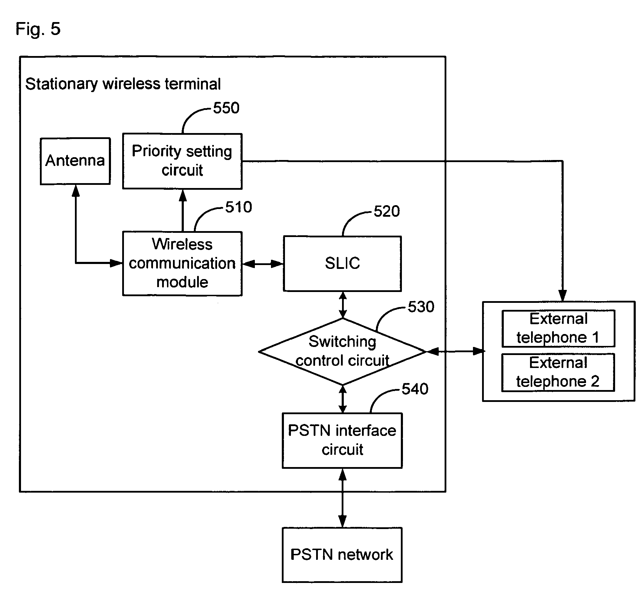

Fig. 5 shows a structural diagram of the application system of the stationary wireless terminal capable of implementing automatically communication lines switching provided by embodiment 2 of the disclosure. The stationary wireless terminal includes: a wireless communication module 510, an SLIC 520, a switching control circuit 530, a PSTN interface circuit 540 and a priority setting circuit 550.

Wherein, except the priority setting circuit 550, the functions and connection relations of other functional modules are the same as that in embodiment 1. All that needs to be pointed out is that the embodiment implements the simultaneous use of the wired network side and the wireless network side, and the external telephone comprises two telephones in the embodiment.

Specifically, the priority setting circuit 550 is connected with the wireless communication module 510 and the two external telephones for setting priorities for using the two external telephones, wherein the external telephone with a higher priority is used preferably; and the external telephone with a lower priority is used when the external telephone with the higher priority is at the off-hook state and there is a new incoming call.

Based on the above technical characteristics, the wireless communication module 510 is further configured to detect from time to time the state of the telephone with the higher priority and controlling the connection state of the telephone, which shows in the subscriber level as follows: when the telephone with the higher priority makes a conversation and there is a new incoming call, it controls the switching control circuit 530 to switch the telephone with the lower priority to the calling state; when the telephone with the higher priority is standby and there is a new incoming call, it is still the telephone with the higher priority in the priority state of being connected.

Based on the connection relations and function descriptions of the above functional modules, the flow of automatically communication lines switching performed by the stationary wireless terminal is discussed in the following.

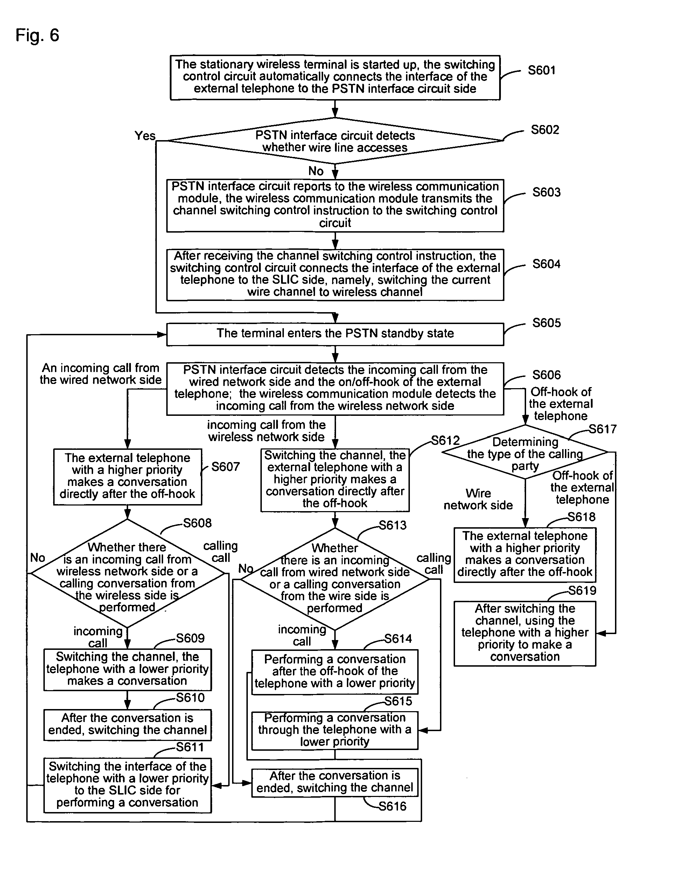

Fig. 6 shows a processing flow of automatically communication lines switching performed by the stationary wireless terminal, which specifically includes following steps:

Step S601, the stationary wireless terminal is started up, the switching control circuit automatically connects the interface of the external telephone to the PSTN interface circuit side.

Due to less impact of external connection on the wired network side, the stationary wireless terminal is usually set in wired network connection state when being started up. However the situation that when the stationary wireless terminal is started up, the interface of the external telephone is automatically connected to the SLIC circuit side via the switching control circuit is not excluded in the disclosure. This embodiment is illustrated by taking the situation of connecting to the network side as an example.

Step S602, PSTN interface circuit automatically detects whether a wired line accesses, if yes, executes Step S605, otherwise, executes Step S603.

Step S603, PSTN interface circuit reports the detection result that the wire line does not access the terminal to the wireless communication module, the wireless communication module transmits the channel switching control instruction to the switching control circuit via the SLIC.

Step S604, after receiving the channel switching control instruction, the switching control circuit connects the interface of the external telephone to the SLIC, namely, switching the current wire channel to wireless channel.

Here, the stationary wireless terminal provided by the disclosure can be used as a stationary wireless terminal connected to the wireless network side separately.

Step S605, the stationary wireless terminal enters the PSTN standby state.

Step S606, the PSTN interface circuit detects an incoming call of the wired network side and the on/off-hook state of the external telephone; the wireless communication module detects an incoming call of the wireless network side, and if there is an incoming call from the wired network side, executes Step S607; if there is an incoming call from the wireless network side, executes Step S612; and executes Step S617 when the off-hook of the external telephone is detected.

Step S607, the PSTN interface circuit reports the detection result of the incoming call to the wireless communication module; since the interface of the external telephone is connected to the PSTN interface circuit side currently, the wireless communication module does not need to transmit the channel switching control instruction, the call can be made directly after the off-hook of the external telephone with the higher priority.

Step S608, the wireless communication module detects from time to time the on/ff-hook state of the telephone with the higher priority, and makes a conversation when the external telephone is at the off-hook state, determines whether there is an incoming call from the wireless network side or whether the wireless network side calling conversation is performed; if there is an incoming call from the wireless network side, executes Step S609; if the wireless network side calling conversation is performed, executes Step S611; otherwise, returns to Step S605 after the call of the wired network side is ended.

Step S609, the wireless communication module transmits the channel switching control instruction to the switching control circuit; the switching control circuit switches the interface of the telephone with the lower priority to the SLIC side, and makes a conversation after the off-hook of the telephone with the lower priority, executes Step S61 0 after the conversation is ended.

Step S610, the wireless communication module transmits the channel switching control instruction to the switching control circuit; the switching control circuit switches the interface of the telephone with the lower priority back to the PSTN interface circuit side, and returns to Step S605.

Step S611, the wireless communication module transmits the channel switching control instruction to the switching control circuit; the switching control circuit connects the interface of the telephone with the lower priority to the SLIC side, and then makes a conversation.

Step S612, the wireless communication module transmits the channel switching control instruction to the switching control circuit; after the switching control circuit connects the interface of the telephone with the higher priority to the SLIC side, the telephone with the higher priority is off hook and makes a conversation.

Step S613, the wireless communication module detects from time to time the on/off-hook state of the telephone with the higher priority, and when the telephone with the higher priority is at the off-hook state, determines whether there is an incoming call from the wired network side or whether the wired network side calling conversation is performed; if there is an incoming call from the wired network side, executes Step S614; if the wired network side calling conversation is performed, executes Step S615; otherwise, executes Step S616 after the call of the wireless network side is ended,

Step S614, since the interface of the telephone with the lower priority is connected with the PSTN interface circuit currently, channel switching is not needed to be performed; the call is made after the off-hook of the telephone with the lower priority, and returns to Step S605 after the conversation is ended.

Step S615, the call is made through the telephone with the lower priority.

Step S616, after the call of the wireless network side is ended, the wireless communication module transmits the channel switching control instruction to the switching control circuit to switch the interface of the telephone with the higher priority to the PSTN interface circuit side, then returns to Step S605.

Step S617, the wireless communication module determines the type of the calling conversation according to the instruction input by the subscriber; and if the type of the calling conversation is a wired network side calling conversation, executes Step S618; if the type of the calling conversation is a wireless network side calling conversation, executes Step S619.

Step S618, since the telephone with the higher priority will be used preferably, wired network side calling conversation is performed in this step through the telephone with the higher priority.

Step S619, the wireless communication module transmits the channel switching control instruction to the switching control circuit; the switching control circuit connects the interface of the telephone with the lower priority to the SLIC side, and then makes a conversation.

Certainly, while performing a conversation in Step S618 and Step S619, it also needs to determine at the same time whether there is an incoming call from the non-calling network side or whether the calling conversation is performed; the determining process is similar to the above process, thus, it is not elaborated here.

Note that, when a telephone is at the calling state, the other telephone cannot use the same loop to make a conversation.

The stationary wireless terminal provided by the embodiment of the disclosure can ensure that the subscriber can receive incoming calls from two networks synchronously by connecting two telephones to perform voice calling service, so that the technical effect that the use is convenient and economic is achieved.

Obviously, those skilled in the art can make various modifications and variations to the disclosure without deviating from the spirit and scope of the disclosure. In this way, if these modifications and variations of the disclosure belong to the scope of the claims of the disclosure and its equivalent technologies, the disclosure intends to include these modifications and transformations therein.

## Claims

1. A stationary wireless terminal for automatically switching communication lines, wherein the stationary wireless terminal comprises a wireless communication module, a subscriber line interface circuit (SLIC), a switching control circuit and a public switched telephone network (PSTN) interface circuit;
the wireless communication module is configured to detect from time to time whether there is an incoming call from a wireless network side, and transmit a channel switching control instruction to the switching control circuit based on a current interface connection state of an external telephone and an incoming call detection result from the wireless network side or a detection result reported by the PSTN interface circuit;
the SLIC is configured to perform a two/four wire line conversion of a voice signal communicated between the wireless communication module and the external telephone during wireless communication;
the switching control circuit is configured to accomplish a connection control of the SLIC or PSTN interface circuit and the external telephone according to the channel switching control instruction transmitted by the wireless communication module;
the PSTN interface circuit is configured to detect a line state and incoming call of a wired network side and detect an on/off-hook state of the external telephone, and report detection result to the wireless communication module.

2. The terminal according to claim 1, wherein,
when an interface of the external telephone is connected to the PSTN interface circuit, the wireless communication module is configured to, when an incoming call from the wireless network side is detected, or when the external telephone is at an off-hook state and is determined as a party calling the wireless network side according to an instruction input by the subscriber, or when the line of the wired network side is disconnected, transmit the channel switching control instruction to the switching control circuit;
when the interface of the external telephone is connected to the SLIC, the wireless communication module is configured to, when there is an incoming call from the wired network side, or when the external telephone is at the off-hook state and is determined as a party calling the wired network side according to the instruction input by the subscriber, transmit the channel switching control instruction to the switching control circuit.

3. The terminal according to claim 2, wherein the external telephone comprises one telephone.

4. The terminal according to claim 3, wherein when receiving the channel switching control instruction, the switching control circuit is configured to connect the interface of the external telephone to the interface circuit of the network side with which a conversation is to be performed, to perform a calling conversation or called conversation.

5. The terminal according to claim 2, wherein the external telephone comprises two telephones.

6. The terminal according to claim 5, wherein the terminal further comprises:
a priority setting circuit, which is connected with the wireless communication module and the two external telephones for setting priorities for using the two external telephones, wherein the external telephone with a higher priority is used preferably; and the external telephone with a lower priority is used when the external telephone with the higher priority is at the off-hook state and there is a new incoming call.

7. The terminal according to claim 6, wherein when receiving the channel switching control instruction transmitted by the wireless communication module, the switching control circuit is configured to connect the interface of the telephone with the higher priority and at the on-hook state currently to the interface circuit of the network side with which a conversation is to be performed, to perform a calling conversation or called conversation.

8. The terminal according to claim 4 or 7, wherein the wireless communication module is further configured to transmit the channel switching control instruction to the switching control circuit after the conversation is ended, for controlling the switching control circuit to switch the interface of the external telephone back to an initial interface connection state.

9. The terminal according to claim 1, wherein the switching control circuit is further configured to, when the stationary wireless terminal is started up, automatically connect the interface of the external telephone to the PSTN interface circuit or the SLIC according to configuration information of the switching control circuit; and automatically connect the interface of the external telephone to the PSTN interface circuit when the stationary wireless terminal is powered down.

10. A switching method for automatically switching communication lines, comprising:
Step 1: detecting from time to time whether there is an incoming call from a wired network side and a wireless network side, and an on/off-hook state of an external telephone;
Step 2: when there is an incoming call, determining whether an interface of the external telephone is connected with a circuit interface of a network side for the incoming call, if not connected, switching the interface of the external telephone to the circuit interface of the network side for the incoming call for performing a conversation;
when the external telephone is at an off-hook state, determining the type of a calling network side according to an instruction input by the subscriber, and determining whether the interface of the external telephone is connected with a circuit interface of the calling network side, if not connected, switching the interface of the external telephone to the circuit interface of the calling network side for performing the conversation.

11. The method according to claim 10, wherein the external telephone comprises one or two telephone(s).

12. The method according to claim 11, wherein when the external telephone comprises two telephones, the method further comprises:
setting priorities for using the two external telephones, wherein the external telephone with a higher priority is used preferably; and the external telephone with a lower priority is used when the external telephone with the higher priority is at the off-hook state and there is a new incoming call.

13. The method according to claim 12, wherein the Step 2 comprises:
when an incoming call from the wired network side or the wireless network side is detected, determining whether the interface of the external telephone is connected with the circuit interface of the network side for the incoming call, if not connected, switching the interface of the external telephone with a higher priority and at the on-hook state currently to the circuit interface of the network side for the incoming call for performing the conversation;
when it is detected that the external telephone is in the off-hook state, determining the type of the calling network side according to the instruction input by the subscriber, and determining whether the interface of the external telephone is connected with the circuit interface of the calling network side, if not connected, switching the interface of the external telephone with the higher priority and at the on-hook state currently to the circuit interface of the calling network side for performing the conversation.

14. The method according to any one of claims 10-13, wherein after Step 2, the method further comprises: switching the interface of the external telephone back to an initial interface connection state after the conversation is ended.
